(19) **Europäisches Patentamt**
**European Patent Office**
**Office européen des brevets**

(11) Veröffentlichungsnummer: **0 149 045**
**A1**

(12) # EUROPÄISCHE PATENTANMELDUNG

(21) Anmeldenummer: **84113548.6**

(22) Anmeldetag: **09.11.84**

(51) Int. Cl.⁴: **F 02 M 65/00**
**F 02 D 41/20, F 02 D 41/24**
**F 02 D 41/34**

(30) Priorität: **15.11.83 DE 3341295**

(43) Veröffentlichungstag der Anmeldung:
**24.07.85 Patentblatt 85/30**

(84) Benannte Vertragsstaaten:
**AT BE CH DE FR GB IT LI NL SE**

(71) Anmelder: **Atlas Fahrzeugtechnik GmbH**
**Eggenpfad 26**
**D-5980 Werdohl(DE)**

(72) Erfinder: **Blauhut, Reinhold**
**Eggenpfad 24**
**D-5980 Werdohl(DE)**

(72) Erfinder: **Schneidmann, Jürgen Willi**
**Mühlenstrasse 5**
**D-5990 Altena 8(DE)**

(72) Erfinder: **Klüppel, Klemens Ludwig**
**Borketalstrasse 35**
**D-5982 Neuenrade(DE)**

(74) Vertreter: **Hassler, Werner, Dr.**
**Postfach 17 04 Asenberg 62**
**D-5880 Lüdenscheid(DE)**

(54) **Einspritzprüfstandsteuergerät.**

(57) Ein prüfstandgerät zur reproduzierbaren Erzeugung von phasen- und dauergesteuerten Einspritzimpulsen für einen Ottomoter. Das technische Problem liegt in der Bereitstellung eines Einspritzprüfstandsteuergerätes, das eine genau reproduzierbare Einstellung von Einspritzbeginn und Einspritzdauer ermöglicht. Eine Anpassungsschaltung (4) leitet aus von einem mit der Kurbelwelle gekoppelten Zahnkranz abgeleiteten Zahnimpulsen eine Bezugsimpulsfolge sowie eine Zahnimpulsfolge ab. Mindestens eine Zählschaltung (10) zur Festlegung es Einspritzbeginns wird unter der Steuerung jedes Bezugsimpulses auf einen Vorladewert aufgeladen, von dem aus die Zahnimpulse gezählt werden. Mindestens eine Einstellschaltung (11) für den Einspritzbeginn ist vorgesehen, deren jeweiliger Einstellwert als Vorladewert für die Zählschaltung (10) dient. Das Ausgangssignal jeder Zählschaltung (10) beaufschlagt eine Endstufe (14) zur Steuerung des jeweiligen Einspritzventils.

Fig.1

EP 0 149 045 A1

Hassler, Werner, Dr.

Patentanwalt

Asenberg 62

D 5880 Lüdenscheid (DE)

**0149045**

3. Oktober 1984

A 84 171

Anmelderin: Firma Atlas Fahrzeugtechnik GmbH

　　　　Eggenpfad 26

　　　　D 5980 Werdohl (DE)

## Einspritzprüfstandsteuergerät

## Beschreibung

Die Erfindung betrifft ein Einspritzprüfstandsteuergerät zur reproduzierbaren Erzeugung von phasen- und dauergesteuerten Einspritzimpulsen für einen Ottomotor.

Aufgabe der Erfindung ist die Bereitstellung eines Einspritzprüfstandsteuergerätes, das eine genau reproduzierbare Einstellung von Einspritzbeginn und Einspritzdauer ermöglicht.

Diese Aufgabe wird nach der Erfindung durch die folgenden Merkmale gelöst:

a) eine Anpassungsschaltung leitet aus von einem mit der Kurbelwelle gekoppelten Zahnkranz abgeleiteten Zahnimpulsen eine Bezugsimpulsfolge sowie eine Zahnimpulsfolge ab;

b) mindestens eine Zählschaltung zur Festlegung des Einspritzbeginns wird unter der Steuerung jedes Bezugsimpulses auf einen Vorladewert aufgeladen, von dem aus die Zahnimpulse gezählt werden;

c) mindestens eine Einstellschaltung für den Einspritzbeginn ist vorgesehen, deren jeweiliger Einstellwert als Vorladewert für die Zählschaltung dient;

d) das Ausgangssignal jeder Zählschaltung beaufschlagt eine Endstufe zur Steuerung des jeweiligen Einspritzventils.

Die Erfindung unterscheidet sich dadurch in nichtnaheliegender Weise vom Stand der Technik, daß jeweils Zahnimpulse gezählt werden, die entsprechend der Phasenstellung der Kurbelwelle erzeugt werden. Durch Einstellung des Einspritzbeginns bezogen auf eine Bezugsphase, legt man eine entsprechende Impulszahl fest. Jeweils nach Abzählen der betreffenden Anzhal von Zahnimpulsen wird ein Einspritzvorgang ausgelöst. Damit ist der Beginn des Einspritzvorganges genau einstellbar und auch genau reproduzierbar.

Damit die Einspritzung für jeden Zylinder gesondert gesteuert werden kann, ist vorgesehen, daß die Zählschaltungen und die Einstellschaltungen in einer der Anzahl der Zylinder des Ottomotors entsprechenden Anzahl vorhanden sind.

Eine genaue Abstimmung des Einspritzbeginns auf den Viertaktbetrieb wird dadurch gewährleistet, daß eine weitere Anpassungsschaltung für ein Bezugssignal der Nockenwellenstellung vorgesehen ist, um den Einspritzbeginn innerhalb einer Viertaktpriode festzulegen.

Damit die Einspritzdauer für jedes Einspritzventil genau festgelegt werden kann, sieht die Erfindung vor, daß jeder Endstufe für ein Einspritzventil eine Steuerstufe für die Einspritzdauer zugeordnet ist und daß eine Einstellstufe für die Einspritzdauer die Steuerstufe beaufschlagt.

Damit die Einspritzdauer für jeden Zylinder individuell beeinflußt werden kann, sieht die Erfindung vor, daß jede Steuerstufe eine Korrekturschaltung für die Einspritzdauer enthält. Damit läßt sich die Einspritzdauer ausgehend von dem in der Einstellstufe eingestellten Grundwert innerhalb eines weiten Bereichs verändern.

Damit für jedes Einspritzventil die vorgegebene Kraftstoffmenge genau eingehalten wird, ist vorgesehen, daß eine Schwellenwertschaltung für den Ventilerregerstrom, die nach Erreichen eines Spitzenstromes ein Signal an die Steuerstufe abgibt, mit der Steuerstufe gekoppelt ist. Damit ist sichergestellt, daß der Ventilstrom nach Erreichen des Spitzenwertes während dervorgegebene Einspritzdauer auf dem Haltestromwert gehalten wird.

Ferner sieht die Erfindung vor, daß die Steuerstufe zusammen mit einer Regelschaltung während der Einspritzdauer einen Haltestrom für das jeweilige Einspritzventil liefert. Dadurch läßt sich die Schaltung an jede Ventilcharakteristik anpassen.

Eine Ausführungsform der Erfindung wird im folgenden unter Bezugnahme auf die anliegenden Zeichnungen erläutert, in denen darstellen:

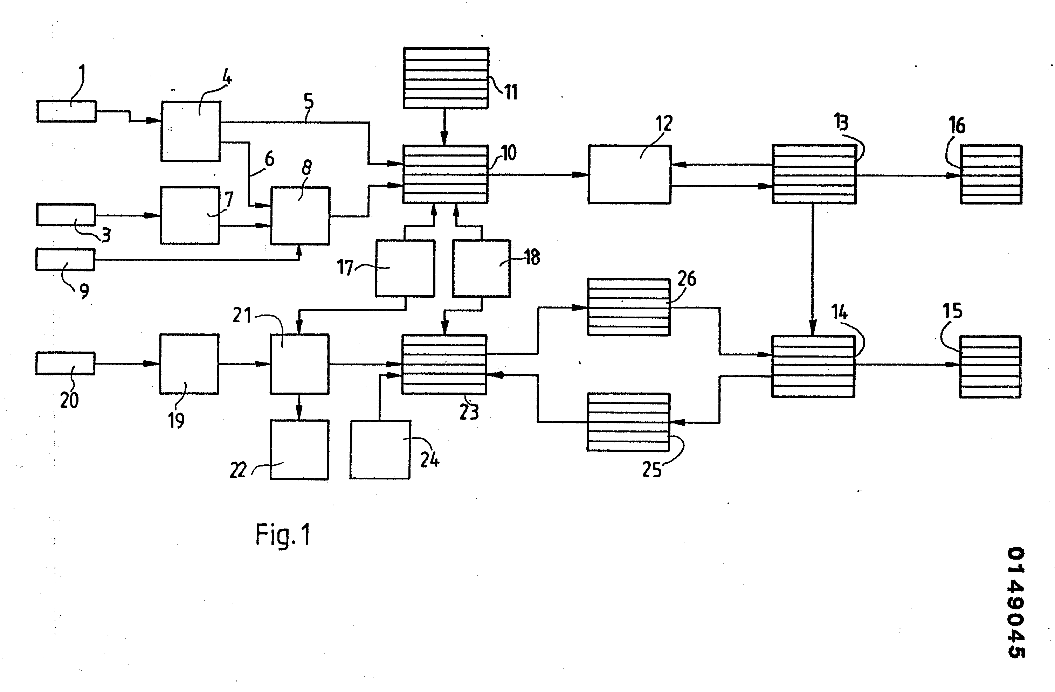

> Fig. 1  ein Blockschaltbild eines Einspritzprüfstandsteuergerätes und
>
> Fig. 2  ein Impulsdiagramm.

Ein Zahnkranzsensor 1 liefert Zahnimpulse, die jeweils phasenabhängig mit der Kurbelwellendrehung erzeugt werden und ein Bezugssignal für eine Bezugsphase der Kurbelwellendrehung. Ein Nockenwellensensor 3 liefert eine Bezugssignal für die Nockenwellendrehung, damit das Einspritzprüfstandsteuergerät in Abhängigkeit von einer vollständigen Viertaktperiode arbeiten kann. Eine Anpassungsschaltung 4 wertet die Impulse des Zahnkranzsensors 1 aus. Es erfolgt eine Impulsformung, eine Trennung der Zahnimpulse für die Leitung 5 und der Bezugsimpulse für die Leitung 6 sowie eine Verdopplung der Zahnimpulse für die Leitung 5. Eine weitere Anpassungsschaltung 7 wertet die Signale des Nockenwellensensors 3 aus. Die Bezugssignale auf der Leitung 6 sowie die Nockenwellenbezugssignale werden in einer Betriebsartstufe 8 ausgewertet, die über eine Einstellschaltung 9 einstellbar ist.

Die Ausgangssignale der Betriebsartstufe 8 sind Signale, die je nach Einstellung der Betriebsart einmal pro Kurbelwellenumdrehung oder einmal pro Viertaktperiode auftreten. Diese Signale beaufschlagen zusammen mit den Zählimpulsen auf der Leitung 5 Zählschaltungen 10, die entsprechend der Zylinderzahl des jeweiligen Motors mehrfach vorhanden sind. In der Zeichnung sind sechs Zählschaltungen für einen Sechszylindermotor dargestellt. Selbstverständlich ist auch jede andere Anzahl von Zählschaltungen für entsprechende Motoren möglich. Jeder Zählschaltung 10 ist eine Einstellschaltung 11 zugeordnet, in der der Einspritzbeginn für den betreffenden Zylinder digital in Form von Zahnimpulsen bezogen auf die Bezugsphase einstellbar ist. Diese Einstellwerte der Einstellschaltungen 11 können als Vorladewerte in die jeweilige Zählschaltung 10 übernommen werden.

Der Zählschaltung 10 ist eine Signalwegsteuerstufe 12 zugeordnet, die in Abhängigkeit von der Einstellung der Einspritzsteuerstufe 13 arbeitet. Dieses wird im folgenden in Einzelheiten erläuert. An die Signalwegsteuerstufe 12 schließen sich Einspritzsteuerstufen 13 an, die Endstufen 14 für die jeweiligen Einspritzventile 15 steuern. An die Einspritzsteuerstufe 13 sind Anzeigestufen 16 angeschlossen, die jeweils anzeigen, welches Einspritzventil in Betrieb ist.

Eine Einschaltstufe 17 dient zur definierten Einschaltung des Gerätes und zur Nullstellung aller Funktionsstufen. Eine Schaltstufe 18 ermöglicht die Übernahme der eingestellten Betriebswerte in die jeweiligen Speicher und Zählschaltungen. Die Einspritzdauer wird in einer Einstellstufe 19 eingestellt, deren Einstellbereich mittels einer Umschaltstufe 20 umschaltbar ist. Eine Einstellspeicherstufe 21 ermöglicht die Speicherung der eingestellten Einspritzdauer, die in der Anzeigestufe 22 angezeigt wird. Für die Einspritzdauer sind sechs Steuerstufen 23 mit je einer Korrekturschaltung vorgesehen. Die Steuerstufen 23 ermöglichen eine individuelle Veränderung der Einspritzdauer für jedes einzelne Einspritzventil. Ein Oszillator 24 liefert

Taktimpulse, durch deren Zählung die Einspritzdauer bestimmt wird. Zur eigentlichen Ventilsteuerung sind sechs Schwellenwertschaltungen 25 für den Ventilstrom und sechs Regelschaltungen 26 für den Haltestrom vorgesehen.

Die Arbeitsweise des Einspritzprüfstandsteuergerät ist wie folgt. Über die Einstellschaltung 9 wird die Funktion der Betriebsartstufe 8 vorgegeben. Bei Zentraleinspritzung wird jeweils nur ein Einspritzventil betätigt. Für dieses Einspritzventil kann die Anzahl der Einspritzzyklen pro Kurbelwellen- oder Nockenwellenperiode eingestellt werden. Man kann auch für jeden Zylinder ein gesondertes Einspritzventil betätigen, dieses ist insbesondere dann der Fall, wenn eine Einzeleinspritzung vorgesehen ist. Die Einstellschaltung 11 ermöglicht die individuelle Einstellung des Einspritzbeginns für die einzelnen Einspritzventile. Diese Einstellschaltung erlaubt in der Betriebsart Einzeleinspritzung die gesonderte Einstellung des Einspritzbeginns jedes der sechs Einspritzventile. In der Einstellstufe 19 wird die Einspritzdauer eingestellt, wobei in der Umschaltstufe 20 der Einstellbereich geändert werden kann. Die Steuerstufe 23 erlaubt eine individuelle Korrektur der Einspritzdauer für die einzelnen Einspritzventile. Z.B. kann die Einspritzdauer digital in einem Bereich von 1/10 ms oder 1/100 ms eingestellt werden. Die Korrektur mittels der Steuerstufe 23 ermöglicht eine Veränderung der Einspritzdauer für jedes einzelne Ventil innerhalb eines Bereichs von ± 9,9 ms. Darüber hinaus sind Einstellungen für den Spitzenstrom des Einspritzventils und auch für den Haltestrom vorgesehen, damit eine Anpassung an die Charakteristiken verschiedener Einspritzventile möglich ist.

Eine Einschaltstufe 17 erlaubt die definierte Einschaltung des gesamten Einspritzprüfstandsteuergeräts. Mit der Betätigung der Einschaltstufe 17 werden alle Zählschaltungen und Speicher auf ihren Ausgangswert oder Nullwert eingestellt. Die Schaltstufe 18 erlaubt bei Betätigung eine Übernahme der Einstellwerte in die jeweiligen Speicher und Zählschaltungen.

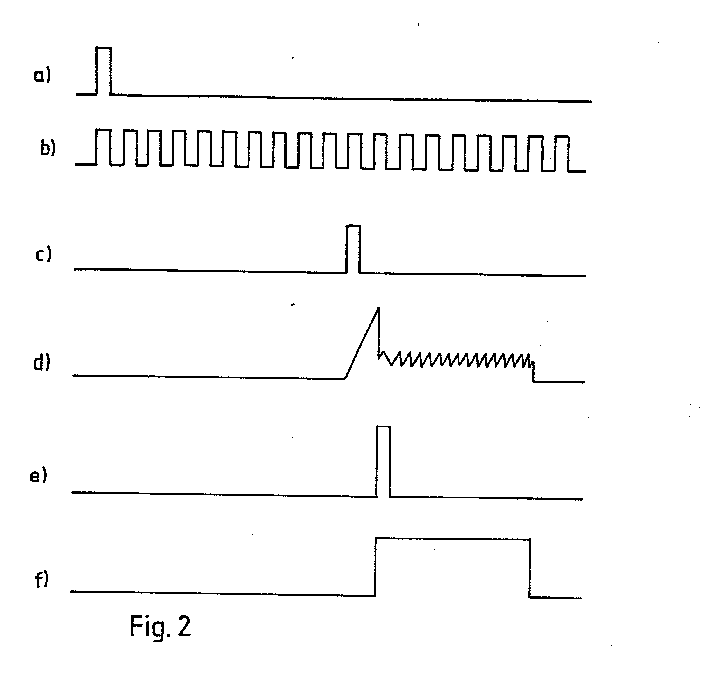

Beim Lauf des Motors werden fortwährend Zahnimpulse entsprechend der Drehung der Kurbelwelle erzeugt. Diese Zahnimpulse werden in der Anpassungsschaltung 4 in eine Zahnimpulsfolge auf der Leitung 5 und eine Bezugsimpulsfolge auf der Leitung 6 getrennt. Die Bezugsimpulsfolge 6, Fig. 2a, wird zusammen mit der Nockenwellenbezugsimpulsfolge aus der Anpassungsschaltung 7 in der Betriebsartstufe 8 verarbeitet. Die Betriebsartstufe 8 gibt je nach Einstellung eine Bezugsimpulsfolge entsprechend der Bezugsphase der Kurbelwelle oder der Bezugsphase der Nockenwelle ab. Dadurch wird der Einspritzbetrieb entsprechend der Kurbelwellendrehung oder entsprechend der Viertaktperiode festgelegt.

Sobald ein Bezugsimpuls auf der Ausgangsleitung der Betriebsartstufe 8 auftritt, werden die Zählschaltungen 10 auf die in der Einstellschaltung 11 eingestellten Vorladewerte geladen. Die Zahnimpulse auf der Leitung 5, Fig. 2b, treten jeweils als Zählimpulse in die Zählschaltung ein, bis der Überlaufwert erreicht wird. Dann wird an die Signalwegsteuerstufe 12 ein Impuls abgegeben, Fig. 2c. Die Signalwegsteuerstufe 12 leitet diesen Impuls entsprechend der Einstellung der Einspritzsteuerstufe 13 weiter.

Die Einspritzsteuerstufen 13 steuern entsprechend der Einstellung die Endstufen 14 für die Einspritzventile 15 an. Die Anzeigestufe 16 zeigt jeweils das in Betrieb befindliche Einspritzventil an. Die Endstufen 14 geben für die Einspritzventile 15 jeweils einen Erregerstrom vor, Fig. 2d. Dieser Erregerstrom wird auch in der Schwellenwertschaltung 25 erfaßt. Sobald dieser Erregerstrom einen Schwellenwert, der dem Spitzenwert entspricht, überschreitet, löst ein Ausgangssignal nach Fig. 2e die Steuerstufe 23 aus. die einerseits den in der Speicherstufe 21 enthaltenen Wert für die Einspritzdauer und außerdem den eingestellten Korrekturwert für das jeweilige Einspritzventil übernimmt. Ein Oszillator 24 liefert Taktimpulse, die in der Steuerstufe 23 gezählt werden und dadurch die Einspritzdauer festlegen, während der die Regelschaltung 26 den Haltestrom, Fig. 2f, für die Endstufe 14 und das Einspritzventil 13 liefert.

Diese Einstellvorgänge wiederholen sich während jeder Kurbelwellenumdrehung bzw. Nockenwellenumdrehung. Man kann bei Zentraleinspritzung lediglich ein Einspritzventil betätigen. Es kann festgelegt werden, wieviel Arbeitszyklen dieses Einspritzventil während einer Kurbelwellenumdrehung bzw. Nockenwellenumdrehung ausführen soll. In anderer Weise können auch bei Einzeleinspritzung Einspritzventile für die jeweiligen Zylinder betätigt werden.

Hassler, Werner, Dr.

Patentanwalt

Asenberg 62

D 5880 Lüdenscheid (DE)
— | —

**0149045**

3. Oktober 1984

A 84 171

Anmelderin: Firma Atlas Fahrzeugtechnik GmbH

Eggenpfad 26

D 5980 Werdohl (DE)

## Einspritzprüfstandsteuergerät

### Patentansprüche

1. Einspritzprüfstandsteuergerät zur reproduzierbaren Erzeugung von phasen- und dauergesteuerten Einspritzimpulsen für einen Ottomotor, gekennzeichnet durch folgende Merkmale:

a) eine Anpassungsschaltung (4) leitet aus von einem mit der Kurbelwelle gekoppelten Zahnkranz abgeleiteten Zahnimpulsen eine Bezugsimpulsfolge sowie eine Zahnimpulsfolge ab·

b) mindestens eine Zählschaltung (10) zur Festlegung des Einspritzbeginns wird unter der Steuerung jedes Bezugsimpulses auf einen Vorladewert aufgeladen, von dem aus die Zahnimpulse gezählt werden;

c) mindestens eine Einstellschaltung (11) für den Einspritzbeginn ist vorgesehen, deren jeweiliger Einstellwert als Vorladewert für die Zählschaltung (10) dient;

d) das Ausgangssignal jeder Zählschaltung (10) beaufschlagt eine Endstufe (14) zur Steuerung des jeweiligen Einspritzventils.

2. Einspritzprüfstandsteuergerät nach Anspruch 1, dadurch gekennzeichnet, daß die Zählschaltungen (10) und die Einstellschaltungen (11) in einer der Anzahl der Zylinder des Ottomotors entsprechenden Anzahl vorhanden sind.

3. Einspritzprüfstandsteuergerät nach Anspruch 1 oder 2, dadurch gekennzeichnet, daß eine weitere Anpassungsschaltung (7) für ein Bezugssignal der Nockenwellenstellung vorgesehen ist, um den Einspritzbeginn innerhalb einer Viertaktperiode festzulegen.

4. Einspritzprüfstandsteuergerät nach einem der Ansprüche 1 bis 3, dadurch gekennzeichnet, daß jeder Endstufe (14) für ein Einspritzventil (15) eine Steuerstufe (23) für die Einspritzdauer zugeordnet ist und daß eine Einstellspeicherstufe (21) für die Einspritzdauer die Steuerstufe (23) beaufschlagt.

- 2 -                                                      0149045

5. Einspritzprüfstandsteuergerät nach Anspruch 4, dadurch gekennzeichnet, daß jede Steuerstufe (23) eine Korrekturschaltung für die Einspritzdauer enthält.

6. Einspritzprüfstandsteuergerät nach Anspruch 4 oder 5, dadurch gekennzeichnet, daß eine Schwellenwertschaltung (25) für den Ventilerregerstrom, die nach Erreichen eines Spitzenstromes ein Signal an die Steuerstufe (23) abgibt, mit der Steuerstufe (23) gekoppelt ist.

7. Einspritzprüfstandsteuergerät nach Anspruch 6, dadurch gekennzeichnet, daß die Steuerstufe (23) zusammen mit einer Regelschaltung (26) während der Einspritzdauer einen Haltestrom für das jeweilige Einspritzventil (15) liefert.

Fig. 1

0149045

A 84171

Atlas

0149045

a)

b)

c)

d)

e)

f)

Fig. 2

Atlas

A 84171

**Europäisches Patentamt**

## EUROPÄISCHER RECHERCHENBERICHT

EP 84 11 3548

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-A-3 312 950 (NISSAN) <br> * Seite 11, Zeilen 11-27; Seite 12, Zeilen 1-7; Seite 13, Zeilen 13-16; Seite 14, Zeile 1 - Seite 15, Zeile 11; Abbildungen 2-6 * <br> --- | 1-5 | F 02 M 65/00 <br> F 02 D 41/20 <br> F 02 D 41/24 <br> F 02 D 41/34 |
| X | DE-A-2 930 487 (AUDI NSU) <br> * Seite 7, Zeile 2 - Seite 9, Zeile 3; Seite 9, Zeile 4 - Seite 12, Zeile 2; Seite 17, letzter Absatz; Abbildung 1 * | 1,4 | |
| A | | 2,3 | |
| A | | 2,3 | |
| A | EP-A-0 027 056 (FORD) <br> * Seite 22, Zeilen 11-33; Abbildungen 1,2 * <br> --- | 6,7 | RECHERCHIERTE SACHGEBIETE (Int. Cl. 3) |
| A | EP-A-0 075 303 (HITACHI) <br> --- | | F 02 D 41/00 <br> F 02 M 65/00 |
| A | EP-A-0 085 909 (NISSAN) <br> --- | | |
| A | DE-B-2 229 372 (DAIMLER-BENZ) <br> ----- | | |

Der vorliegende Recherchenbericht wurde für alle Patentansprüche erstellt.

| Recherchenort | Abschlußdatum der Recherche | Prüfer |
|---|---|---|
| BERLIN | 12-02-1985 | NORDSTROEM U.L.N. |